# EUROPÄISCHE PATENTSCHRIFT

(11) **EP 3 875 569 B1**
(45) Veröffentlichungstag und Bekanntmachung des Hinweises auf die Patenterteilung: **02.11.2022**
(21) Anmeldenummer: 21156468.7
(22) Anmeldetag: 11.02.2021
(51) Int. Cl.: C12G 1/028, C12H 1/04, C12F 3/02, C12F 3/04

(54) **GÄRGASKONDENSATION**
FERMENTATION GAS CONDENSATION
CONDENSATION DES GAZ DE FERMENTATION

(30) Priorität: 04.03.2020 DE 102020105765
(43) Veröffentlichungstag der Anmeldung: 08.09.2021
(73) Patentinhaber: Neisius, Jürgen, 54421 Reinsfeld (DE)
(72) Erfinder: Neisius, Jürgen, 54421 Reinsfeld (DE)
(74) Vertreter: Zeiner, Johannes Michael

(56) Entgegenhaltungen:
- FR-A- 1 006 177
- US-A- 4 908 219
- US-B1- 8 956 671
- Anonymous: "Echangeur thermique (pour réguler la température du vin)", , 29. September 2017 (2017-09-29), XP055820295, Gefunden im Internet: URL:https://web.archive.org/web/2017092912 2803/https://dico-du-vin.com/echangeur-the rmique-pour-reguler-la-temperature-du-vin/ [gefunden am 2021-07-01]

## Beschreibung

Die vorliegende Erfindung betrifft ein Verfahren zur Herstellung einer gegorenen Mischung durch alkoholische Gärung einer gärfähigen Mischung sowie eine gegorene Mischung (nicht Teil der Erfindung) erhältlich nach diesem Verfahren.

Zur Herstellung von Weißwein wird üblicherweise zunächst Maische aus Trauben hergestellt, welche anschließend gekeltert (gepresst) wird. Der beim Keltern erhaltene Most wird dann zu Wein vergoren und dieser anschließend gereift. Ebenso ist es möglich, zur Herstellung von Weißwein die Trauben direkt zu keltern und den erhaltenen Most dann zu Wein zu vergären.

Zur Herstellung von Rotwein wird üblicherweise Maische direkt vergoren unter Erhalt des Rotweins. Erst nach dem Gärprozess wird der Wein gepresst.

Bei der Gärung entsteht neben verschiedenen Aromastoffen und Ethanol gasförmiges Kohlenstoffdioxid, welches aus dem Gärbottich entweicht. Weitere flüchtige oder flüssige Bestandteile wie Ester, Alkohole und Ketone können im sich ständig neu entwickelnden Kohenstoffdioxid kein Dampfdruckgleichgewicht ausbilden und werden dadurch aus der gärenden Maische oder dem gärenden Most entfernt (sogenanntes Stripping). Dies ist insbesondere bei höheren Gärtemperaturen der Fall. Um dieses Stripping der weiteren flüchtigen oder flüssigen Bestandteile zu verhindern, werden häufig niedrige Gärtemperaturen eingesetzt. Nachteilig ist allerdings, dass bei niedrigen Gärtemperaturen der Verlauf der Gärung langsam ist oder sogar völlig zum Erliegen kommt und unter Umständen auch unerwünschte Nebenreaktionen eintreten. In der Praxis wird daher häufig eine mittlere Gärtemperatur verwendet, bei der die Gärung ausreichend schnell verläuft, gleichzeitig aber nur geringes Stripping der Bestandteile erfolgt. Die Gärung bei mittlerer Gärtemperatur ist jedoch relativ langsam. Es existieren teilautomatisierte Gärsteuerungen, die im Verlauf der Gärung die Temperatur innerhalb des mittleren Bereichs variieren. Wegen der langen Gärzeiten befinden sich in der Erntesaison alle Chargen eines Weingutes gleichzeitig in verschiedenen Phasen der Gärung. Daher muss jeder einzelne Gärbehälter eines Weingutes mit einer solchen Gärsteuerung ausgestattet werden. Dies treibt die Investitionen für eine Teilautomatisierung extrem in die Höhe.

US 8,956,671 B1 beschreibt ein Verfahren zur Rückgewinnung flüchtiger organischer Komponenten (VOCs) bei einem Fermentationsprozess. Dabei wird ein Kondensator zur Kondensation der VOCs verwendet.

US 4,908,219 A beschreibt einen Fermentationsprozess, bei dem flüchtige Bestandteile rückgewonnen werden. In dem beschriebenen Verfahren werden die Bestandteile mittels fraktionierter Kondensation rückgewonnen.

FR1 006 177 A beschreibt einen Fermentationsprozess, bei dem flüchtige Bestandteile rückgewonnen werden. In diesem Prozess kommen die flüchtigen Bestandteile in direkten Kontakt mit einer Kühlflüssigkeit.

Anonymous: "Echangeur thermique (pour reguler la temperature du vin)", 29. September 2017 beschreibt die Verwendung von Wärmetauschern in der Weinherstellung.

Es besteht daher Bedarf an weiteren Verfahren zur Gärung, die ein schnelles Vergären mit geringem oder sogar gar keinem Verlust der weiteren flüchtigen oder flüssigen Bestandteile erlauben. Das Verfahren soll zudem einfach und kostengünstig durchführbar sein.

Diese Aufgabe wird erfindungsgemäß gelöst durch ein Verfahren zur Herstellung einer gegorenen Mischung, wobei das Verfahren die folgenden Schritte umfasst:
a) Bereitstellen einer gärfähigen Mischung in einem ersten Reaktor,
b) Gärung der in Schritt a) bereitgestellten gärfähigen Mischung in dem ersten Reaktor bei einer ersten Temperatur (T1) für einen ersten Zeitraum (t1) unter Erhalt einer Flüssigphase und eines ersten Gasstroms, wobei die Flüssigphase eine gegorene Mischung enthält und der erste Gasstrom Kohlenstoffdioxid enthält,
c) Überführen des in Schritt b) erhaltenen ersten Gasstroms aus dem ersten Reaktor in einen ersten Kondensator, wobei der erste Gasstrom von der in Schritt b) erhaltenen Flüssigphase abgetrennt wird unter Erhalt der gegorenen Mischung in dem ersten Reaktor und des ersten Gasstroms in dem ersten Kondensator, wobei der erste Gasstrom in dem ersten Kondensator in Schritt c) zumindest teilweise kondensiert wird unter Verwendung einer Waschflüssigkeit, die eine zweite Temperatur (T2) aufweist, wobei
die zweite Temperatur (T2) im Bereich von -50 °C bis -10 °C liegt,wobei die Waschflüssigkeit in direkten Kontakt mit dem ersten Gasstrom kommt und wobei zwischen dem ersten Gasstrom und der Waschflüssigkeit Wärmeaustausch und Stoffaustausch möglich ist, wobei der erste Gasstrom (16) in Schritt c) fraktioniert kondensiert wird.

Das erfindungsgemäße Verfahren erlaubt das Gären von gärfähigen Mischungen bei relativ hohen Temperaturen mit wenig oder keinem Verlust der bevorzugt im ersten Gasstrom enthaltenen weiteren Bestandteile. Zudem kann der in Schritt c) abgetrennte und zumindest teilweise kondensierte erste Gasstrom in die gegorene Mischung ganz oder teilweise rückgeführt werden, insbesondere nach Abschluss der Gärung in Schritt b). Dadurch kann gezielt beispielsweise der Geschmack, der Geruch und/oder der Alkoholgehalt der gegorenen Mischung beeinflusst werden. Weiterhin ist das erfindungsgemäße Verfahren besonders gut automatisierbar.

In Schritt a) des erfindungsgemäßen Verfahrens wird eine gärfähige Mischung bereitgestellt. Unter einer "gärfähigen Mischung" wird im Rahmen der vorliegenden Erfindung eine Mischung verstanden, die Kohlenhydrate, insbesondere Zucker und/oder Stärke enthält, die in einem enzymatischen Prozess unter anoxischen Bedingungen zu Ethanol und Kohlenstoffdioxid abgebaut werden können. Bevorzugt kann die gärfähige Mischung der alkoholischen Gärung unterzogen werden.

Die gärfähige Mischung kann eine homogene Lösung sein. Ebenso ist es möglich und erfindungsgemäß bevorzugt, dass die gärfähige Mischung eine Suspension ist. Die gärfähige Mischung kann beispielsweise auch eine kolloidale Lösung sein. Ebenso ist es möglich, dass die gärfähige Mischung Bestandteile enthält, die als homogene Lösung vorliegen, Bestandteile, die darin suspendiert sind, und Bestandteile, die darin kolloidal vorliegen. Gärfähige Mischungen sowie Verfahren zu deren Herstellung sind dem Fachmann bekannt. Die gärfähige Mischung ist beispielsweise eine zuckerhaltige und/oder stärkehaltige Mischung, die der oben beschriebenen Gärung, insbesondere der alkoholischen Gärung unterzogen werden kann. Die gärfähige Mischung ist beispielsweise ausgewählt aus der Gruppe bestehend aus Apfelmost, Traubenmost, Obst, Getreide wie beispielsweise Mais, Hirse und/oder Reis, Pseudogetreide wie beispielsweise Quinoa und/oder Amaranth, Hackfrüchte wie beispielsweise Kartoffeln, Topinambur, Zuckerrüben, Maniok und/oder Ingwer, Honig, Milch, Soja und Zuckerrohr. Bevorzugt ist die gärfähige Mischung Traubenmost.

Apfelmost wird üblicherweise durch das Pressen (in Fachkreisen auch Keltern genannt) von Äpfeln gewonnen, Traubenmost durch das Pressen von Trauben. Diese Verfahren sind dem Fachmann bekannt.

Die gärfähige Mischung enthält daher üblicherweise Wasser, Hefe, Fruchtsäuren, Polyphenole, Mono- und Disaccharide. Darüber hinaus kann die gärfähige Mischung weitere Komponenten wie beispielsweise Terpene, Terpenoide, Thiole, Ester, Alkohole, Pyrazine, und/oder weitere Aromastoffe enthalten. Darüber hinaus können gärfähige Mischungen eingesetzt werden, die Wasser, Fruchtsäuren, Schimmelpilze, Polyphenole, Mono- und Disaccharide enthalten oder gärfähige Mischungen, die Wasser, Fruchtsäuren, Bakterien, Polyphenole, Mono- und Disaccharide enthalten.

Mono- und Disaccharide sind dem Fachmann bekannt und beispielsweise ausgewählt aus der Gruppe bestehend aus Fructose, Glucose, Saccharose und Maltose.

Als Hefe eignet sich insbesondere *Saccharomyces cerevisiae, Saccharomyces bayanus, Saccharomyces ellipsoides* und *Saccharomyces uvarum,* sowie *Apiculatus, Hanseniaspora, Candida, Metschnikowia* und *Torulaspora.*

Ein geeigneter Schimmelpilz ist beispielsweise *Aspergillus flavus var Oryzae.* Ein geeignetes Bakterium ist beispielsweise *Zymomonas mobilis.*

Für die in der gärfähigen Mischung enthaltenen weiteren Komponenten gelten die für die weiter unten beschriebenen Ausführungen und Bevorzugungen für die in der gegorenen Mischung enthaltenen weiteren Komponenten entsprechend. Derartige gärfähige Mischung sind dem Fachmann bekannt.

Bevorzugt ist die gärfähige Mischung Traubenmost. Bevorzugt enthält die gärfähige Mischung daher Wasser, Hefe, Weinsäure, Apfelsäure, Polyphenole, Glucose, Saccharose und Fructose.

Erfindungsgemäß bevorzugt ist daher ein Verfahren zur Herstellung einer gegorenen Mischung, bei dem die in Schritt a) bereitgestellte gärfähige Mischung Wasser, Hefe, Weinsäure, Apfelsäure, Glucose, Saccharose und Fructose enthält.

Beispielsweise enthält die gärfähige Mischung im Bereich von 30 bis 360 g Mono- und Disaccharide pro Liter gärfähige Mischung. Beispielsweise enthält die gärfähige Mischung im Bereich von 20 bis 40 g Trockenhefe pro 100 Liter gärfähige Mischung.

Die gärfähige Mischung wird in einem ersten Reaktor bereitgestellt. Als erster Reaktor eignen sich alle dem Fachmann bekannten Reaktoren. Bevorzugt ist der erste Reaktor ein Bioreaktor. Beispielsweise liegt das Volumen des ersten Reaktors im Bereich von 100 I bis 50000 I. Der erste Reaktor ist beispielsweise ein Gärtank. Ein Gärtank ist dem Fachmann als solcher bekannt. Im erfindungsgemäßen Verfahren kann ein kommerziell erhältlicher Gärtank eingesetzt werden. Der erste Reaktor kann beispielsweise einen Rührer umfassen. Es ist bevorzugt, dass der erste Reaktor zumindest einen Wärmetauscher umfasst.

Bevorzugt ist daher auch ein Verfahren zur Herstellung einer gegorenen Mischung, bei dem der erste Reaktor einen Wärmetauscher umfasst.

Der Wärmetauscher kann zum Heizen des ersten Reaktors verwendet werden. Ebenso kann der Wärmetauscher zum Kühlen des ersten Reaktors verwendet werden. Beispielsweise kann der erste Reaktor im erfindungsgemäßen Verfahren zunächst geheizt werden, sodass die Gärung in Schritt b) einsetzt. Üblicherweise verläuft die Gärung in Schritt b) exotherm. Es ist daher möglich, dass der erste Reaktor sobald die Gärung einsetzt, durch den Wärmetauscher gekühlt wird. Es ist ebenso möglich, dass der erste Reaktor elektrisch, mittels Erdgas oder mittels Wärmepumpe beheizt wird. Die Kühlung kann beispielsweise über einen Doppelmantel oder über Kaltwassereinsätze als Wärmetauscher erfolgen. Es ist möglich, dass der erste Reaktor durch den Wärmetauscher sowohl gekühlt als auch geheizt werden kann.

Vorzugsweise ist der erste Reaktor ein Edelstahlreaktor, beispielsweise ein Edelstahlreaktor aus V4A Stahl. Es ist ebenso möglich, dass der erste Reaktor aus Polyethylen hergestellt ist.

Es ist weiterhin bevorzugt, dass der erste Reaktor eine Vorrichtung zum Einblasen von Gasen wie Luft und/oder Schwefeldioxid umfasst. Darüber hinaus ist es bevorzugt, dass der erste Reaktor mindestens eine Ableitung zum Überführen des ersten Gasstroms in den ersten Kondensator in Schritt c) umfasst.

Der erste Reaktor kann weiterhin eine Pumpe umfassen, sodass Gase wie Luft und/oder Schwefeldioxid automatisiert durch die Pumpe in den ersten Reaktor eingepumpt werden können. Ebenso ist es möglich, über die Pumpe andere, nicht gasförmige Komponenten wie beispielsweise Kaliumdisulfit, insbesondere Kaliumdisulfitlösung, zuzuführen.

Darüber hinaus kann der erste Reaktor weitere Einbauten umfassen, wie beispielsweise Dichtesensoren. Dichtesensoren als solche sind dem Fachmann bekannt. Ein Dichtesensor erlaubt beispielsweise die automatische Überwachung der Gärung in Schritt b) indem die Dichte der Flüssigphase kontinuierlich gemessen wird und ermöglicht eine automatische Temperierung des ersten Reaktors abhängig von der Dichte der Flüssigphase, sodass die Temperatur des ersten Reaktors automatisch gesteuert werden kann. So kann beispielsweise der weiter unten beschriebene Schritt d) vollautomatisiert durchgeführt werden. Dies ist insbesondere in Kombination mit der in einer Ausführungsform des ersten Reaktors umfassten Pumpe vorteilhaft, da dann abhängig von der Messung des Dichtesensors die Pumpe Gase oder nicht gasförmige Komponenten vollautomatisiert einpumpen kann.

Es ist darüber hinaus möglich, die in einer bevorzugten Ausführungsform der Erfindung bevorzugt durchgeführte fraktionierte Kondensation mit Hilfe des Dichtesensors zu steuern.

In Schritt b) wird die in Schritt a) bereitgestellte gärfähige Mischung in dem ersten Reaktor gegoren. Die Gärung einer gärfähigen Mischung ist dem Fachmann als solche bekannt. Beispielsweise setzt die in einer bevorzugten Ausführungsform der vorliegenden Erfindung in der gärfähigen Mischung enthaltene Hefe die ebenfalls bevorzugt enthaltene Glucose gemäß nachfolgender Formel I zu Ethanol um:

1*C*₆*H*₁₂*O*₆→2*C*₂*H*₅*OH*+2*CO*₂ I

Diese Reaktion ist dem Fachmann allgemein bekannt. Bei der Gärung bilden sich üblicherweise noch weitere Verbindungen. Insbesondere bilden sich Aromastoffe wie beispielsweise Ester, Alkohole, Aldehyde, Ketone, Thiole und/oder Pyrazine. Diese Reaktionen sind dem Fachmann bekannt und beispielsweise beschrieben in Wüst, Matthias; Mosandl, Armin (2002): Wein ist ein besonderer Saft. Zur Biosynthese von Duft- und Aromastoffen höherer Pflanzen. Forschung Frankfurt 2002. https://www.forschungfrankfurt.uni-frankfurt.de/36050169/aromaforschung_8-15.pdf; Wüst, Matthias (2003): Wein - Qualität entscheidet sich im Nanogramm: Zur Biochemie des sortentypischen Weinaromas. Chemie in unserer Zeit (37): 8-17. Wiley-VCH, Weinheim; Swiegers, J. et al. (2005): Australian J. Grape Wine Res., 11, 139-173. Nach: Lehrstuhl Lebensmitteltechnologie, TU München. Vorlesung: Technologie des Weins. Aromastoffe im Wein; http://alt.wzw.tum.de/fileadmin/VL_KHE_2013_14/Wein_Aroma_2013_14.pdf.

Bei der Gärung der gärfähigen Mischung werden eine Flüssigphase und ein erster Gasstrom erhalten. Die Flüssigphase enthält die gegorene Mischung, der erste Gasstrom enthält Kohlenstoffdioxid.

Die Flüssigphase kann darüber hinaus auch die gärfähige Mischung enthalten. Üblicherweise ist zu Beginn von Schritt b) der Anteil an gärfähiger Mischung in der Flüssigphase höher als am Ende von Schritt b), gleichzeitig ist zu Beginn von Schritt b) der Anteil an gegorener Mischung in der Flüssigphase geringer als am Ende von Schritt b). Bei dem oben beschriebenen Überwachen des Verlaufs der Gärung der gärfähigen Mischung in Schritt b) mit einem Dichtesensor wird üblicherweise die Änderung der Dichte der Flüssigphase überwacht. Die Dichte der Flüssigphase ändert sich über den Verlauf der Gärung hinweg durch die Gärung der gärfähigen Mischung und die daraus resultierende Änderung der Zusammensetzung der Flüssigphase. Insbesondere nimmt die Dichte der Flüssigphase über den Verlauf der Gärung hinweg ab.

Die Flüssigphase kann eine homogene Lösung sein. Ebenso ist es möglich und erfindungsgemäß bevorzugt, dass die Flüssigphase eine Suspension ist. Die Flüssigphase kann beispielsweise auch eine Kolloidale Lösung sein. Ebenso ist es möglich, dass die Flüssigphase Bestandteile enthält, die als homogene Lösung vorliegen, Bestandteile, die darin suspendiert sind, und Bestandteile, die darin kolloidal vorliegen.

Die gegorene Mischung enthält üblicherweise die in der gärfähigen Mischung enthaltenen Komponenten, also Wasser, Hefe, Fruchtsäuren, Mono- und Disaccharide. Bevorzugt enthält sie Wasser, Hefe, Weinsäure, Apfelsäure, Glucose, Saccharose und Fructose. Sie kann außerdem die in der gärfähigen Mischung enthaltenen weiteren Komponenten enthalten wie beispielsweise Terpenoide, Thiole, Ester, Alkohole, und/oder weitere Aromastoffe. Zusätzlich enthält sie üblicherweise Ethanol sowie Kohlenstoffdioxid und weitere während der Gärung gebildete Verbindungen. Es ist möglich, dass zumindest ein Teil der weiteren Komponenten nicht in der gärfähigen Mischung enthalten war und sich erst bei der Gärung der gärfähigen Mischung bildet. Es versteht sich von selbst, dass der Anteil der einzelnen Komponenten in der gegorenen Mischung von dem Anteil der einzelnen Komponenten in der gärfähigen Mischung verschieden ist.

In der gegorenen Mischung enthaltene Terpenoide sind beispielsweise ausgewählt aus der Gruppe bestehend aus Linalool, Geraniol, Nerol, Citronellol, Hotrienol, Weinlacton, cis-Rosenoxid, α-Terpineol, (E)-β-Damascenon, β-Ionon, Actinidol, Vitispiran, 1,1,6-Trimethyl-1,2-dihydronaphthalin (TDN) und Neroloxid. In der gegorenen Mischung können darüber hinaus weitere Terpenoide enthalten sein.

In der gegorenen Mischung enthaltene Thiole sind beispielsweise ausgewählt aus der Gruppe bestehend aus 4-Mercapto-4-methylpentan-2-on (4MMP), 4-Mercapto-4-methylpentan-2-ol (4MMPOH), 3-Mercapto-3-methylbutan-1-ol (3MMB), 3-Mercaptohexylacetat (A3MH) und 3-Mercaptohexan-1-ol (3MH). In der gegorenen Mischung können darüber hinaus weitere Thiole enthalten sein.

Weitere Aromastoffe, die in der gegorenen Mischung enthalten sein können, sind beispielsweise Methoxypyrazine. In der gegorenen Mischung enthaltene Methoxypyrazine sind dem Fachmann bekannt und beispielsweise ausgewählt aus der Gruppe bestehend aus 2-Methoxy-3-isobutylpyrazin, 2-Methoxy-3-ispropylpyrazin, 2-Methoxy-3-sec-butylpyrazin und 2-Methoxy-3-ethylpyrazin. In der gegorenen Mischung können darüber hinaus weitere Methoxypyrazine enthalten sein.

Ester, die in der gegorenen Mischung enthalten sein können, sind beispielsweise ausgewählt aus der Gruppe bestehend aus Ethylacetat, Isoamylacetat, 2-Phenylethylacetat, Isobutylacetat, Hexylacetat, Ethylbutanoat, Ethylhexanoat, Ethyloctanoat und Ethyldecanoat. In der gegorenen Mischung können darüber hinaus weitere Ester enthalten sein.

Alkohole, die in der gegorenen Mischung enthalten sein können, sind beispielsweise ausgewählt aus der Gruppe bestehend aus Ethanol, Propanol, Butanol, Isobutanol, Isoamylalkohol, Hexanol, 2-Phenylethylalkohol, Glycerol, 4-Ethylphenol, 4-Ethylguaiacol, 4-Vinylphenol und 4-Vinylguaiacol. In der gegorenen Mischung können darüber hinaus weitere Alkohole enthalten sein.

Aldehyde, die in der gegorenen Mischung enthalten sein können, sind beispielsweise Acetaldehyd, Hexanal und (E)-2-Hexenal.

Ketone, die in der gegorenen Mischung enthalten sein können, sind beispielsweise ausgewählt aus der Gruppe bestehend aus Diacetyl, 2-Acetyl-1-pyrroline und 2-Acetyltetrahydropyridin. In der gegorenen Mischung können darüber hinaus weitere Ketone enthalten sein.

Gegenstand der vorliegenden Beschreibung (nicht Teil der Erfindung) ist daher auch eine gegorene Mischung erhältlich nach dem erfindungsgemäßen Verfahren.

Der erste Gasstrom enthält Kohlenstoffdioxid. Darüber hinaus kann der erste Gasstrom weitere gasförmige Bestandteile wie Sauerstoff enthalten. Es ist weiterhin möglich, dass der erste Gasstrom außerdem feste oder flüssige Bestandteile enthält, wie beispielsweise Hefe, Alkohole, Terpenoide, Ester, Aldehyde, Ketone, Pyrazine und/oder Thiole aus der Flüssigphase. Darüber hinaus kann der erste Gasstrom Säuren enthalten, wie beispielsweise Schwefeldioxid und/oder Essigsäure. Diese Säuren sind üblicherweise bereits in der gegorenen Mischung enthalten.

Bevorzugt ist daher ein Verfahren zur Herstellung einer gegorenen Mischung, bei dem der in Schritt b) erhaltene erste Gasstrom zusätzlich mindestens einen weiteren Bestandteil ausgewählt aus der Gruppe bestehend aus Hefe, Alkoholen, Terpenoiden, Estern, Aldehyden, Ketonen, Pyrazinen und Thiolen enthält.

Der erste Gasstrom kann daher ein erster Gasstrom, der eine homogene Gasphase enthält, sein, es ist auch möglich, dass es sich bei dem ersten Gasstrom beispielsweise um ein Aerosol handelt. Flüssige Bestandteile können als Dämpfe innerhalb der Gasphase vorliegen.

Üblicherweise bildet sich der erste Gasstrom in dem ersten Reaktor oberhalb der Flüssigphase. Darüber hinaus ist es möglich, dass ein Teil des ersten Gasstroms in der Flüssigphase gelöst und/oder dispergiert vorliegt.

Die Gärung in Schritt b) findet bei einer ersten Temperatur (T1) statt. Die erste Temperatur (T1) liegt beispielsweise im Bereich von 5 bis 50 °C, bevorzugt im Bereich von 15 bis 45 °C, insbesondere bevorzugt im Bereich von 30 bis 35 °C. Es ist außerdem möglich, die erste Temperatur (T1) über den ersten Zeitraum (t1) zu variieren.

Bevorzugt ist daher auch ein Verfahren zur Herstellung einer gegorenen Mischung, bei dem die erste Temperatur (T1) in Schritt b) im Bereich von 5 bis 50 °C liegt.

Die Gärung in Schritt b) erfolgt für einen ersten Zeitraum (t1). Der erste Zeitraum (t1) wird üblicherweise so gewählt, dass die Gärung in Schritt b) im Wesentlichen abgeschlossen ist. "Im Wesentlichen abgeschlossen" bedeutet im Rahmen der vorliegenden Erfindung, dass weniger als 10 g pro Liter, bevorzugt weniger als 4 g pro Liter nicht umgesetzter Zucker in der gegorenen Mischung enthalten sind.

Der erste Zeitraum (t1) liegt beispielsweise in einem Bereich von einer Stunde bis sechs Monaten, bevorzugt im Bereich von fünf Stunden bis einen Monat, insbesondere bevorzugt im Bereich von einem Tag bis zehn Tagen.

Bevorzugt ist daher auch ein Verfahren zur Herstellung einer gegorenen Mischung, bei dem der erste Zeitraum (t1) im Bereich von einer Stunde bis sechs Monaten liegt.

In Schritt c) wird der in Schritt b) erhaltene erste Gasstrom aus dem ersten Reaktor in einen ersten Kondensator überführt. Dabei wird der erste Gasstrom von der in Schritt b) erhaltenen Flüssigphase abgetrennt unter Erhalt der gegorenen Mischung in dem ersten Reaktor und des ersten Gasstroms in dem ersten Kondensator.

Schritt c) kann zeitgleich mit Schritt b) durchgeführt werden, ebenso ist es möglich, dass Schritt c) nach Schritt b) durchgeführt wird. Bevorzugt wird Schritt c) zeitgleich mit Schritt b) durchgeführt.

Das Überführen des in Schritt b) erhaltenen ersten Gasstroms aus dem ersten Reaktor in den ersten Kondensator kann nach allen dem Fachmann bekannten Verfahren erfolgen. Beispielsweise kann das Überführen durch Pumpen des ersten Gasstroms aus dem ersten Reaktor in den ersten Kondensator erfolgen oder durch Überleiten des ersten Gasstroms aus dem ersten Reaktor in den ersten Kondensator, beispielsweise durch eine Rohrleitung und/oder ein Ventil.

Dabei wird der erste Gasstrom von der Flüssigphase abgetrennt unter Erhalt der gegorenen Mischung in dem ersten Reaktor. Die gegorene Mischung kann Reste des ersten Gasstroms enthalten. Die gegorene Mischung kann auch Reste der gärfähigen Mischung enthalten.

Der erste Gasstrom wird in dem ersten Kondensator erhalten.

Es ist möglich und erfindungsgemäß bevorzugt, dass der erste Gasstrom beim Überführen von dem ersten Reaktor in den ersten Kondensator zunächst durch einen ersten Absorber geleitet wird. In dem ersten Absorber werden saure Bestandteile des ersten Gasstroms, wie beispielsweise Essigsäure und/oder Schwefeldioxid absorbiert. Beispielsweise kann die Absorption an einem Lösungsmittel wie beispielsweise einer Kaliumhydrogencarbonatlösung erfolgen. Dies ist dem Fachmann als solches bekannt. Die Kaliumhydrogencarbonatlösung weist bevorzugt mindestens dieselbe Temperatur auf wie der erste Gasstrom, mehr bevorzugt weist die Kaliumhydrogencarbonatlösung eine höhere Temperatur als der erste Gasstrom auf. So kann ein Kondensieren des ersten Gasstroms vermieden werden.

Als Absorber bevorzugt ist daher ein Gaswäscher. Gaswäscher sind dem Fachmann als solche bekannt. Geeignete Gaswäscher sind beispielsweise ausgewählt aus der Gruppe bestehend aus Blasensäulen, Sprühwäschern, Füllkörperkolonnen, Bodenkolonnen, Strahlwäschern, Rotationswäschern, Venturiwäschern, Fallfilmwäschern und Wirbelwäschern.

Der so gereinigte erste Gasstrom kann dann in den ersten Kondensator weitergeleitet werden.

Es ist ebenso möglich, dass der erste Gasstrom aus dem Absorber zunächst in einen Adsorber überführt wird. In dem Adsorber kann der erste Gasstrom mit einem Adsorbens in Kontakt gebracht werden. Bevorzugt wird in dem Adsorber Wasser aus dem ersten Gasstrom adsorbiert. Ein geeignetes Adsorbens ist beispielsweise ein Trocknungsmittel wie beispielsweise Zeolith 3A. Als Adsorber eignen sich alle bekannten Adsorber wie beispielsweise Festbettadsorber.

In dem ersten Kondensator wird der erste Gasstrom zumindest teilweise kondensiert unter Verwendung einer Waschflüssigkeit. Die Waschflüssigkeit weist eine zweite Temperatur (T2) auf.

Die Waschflüssigkeit weist eine zweite Temperatur (T2) auf, die im Bereich von -50 °C bis - 10 °C liegt und bevorzugt im Bereich von -30 °C bis -20 °C.

Bevorzugt ist daher auch ein Verfahren zur Herstellung einer gegorenen Mischung, bei dem die zweite Temperatur (T2) im Bereich von -30 °C bis -20° C liegt.

Als Waschflüssigkeit können alle bekannten Flüssigkeiten eingesetzt, werden, die bei der zweiten Temperatur (T2) flüssig sind. Bevorzugt ist die Waschflüssigkeit für den Menschen ungiftig. Bevorzugt enthält die Waschflüssigkeit Ethanol. Beispielsweise enthält die Waschflüssigkeit im Bereich von 20 bis 35 Vol.-% Ethanol bezogen auf das Gesamtvolumen Ethanol.

Bevorzugt ist daher auch ein Verfahren zur Herstellung einer gegorenen Mischung, bei dem die verwendete Waschflüssigkeit Ethanol enthält.

Durch das in der Waschflüssigkeit bevorzugt enthaltene Ethanol ist die Absorption der weiteren Bestandteile des ersten Gasstroms, insbesondere der lipophilen Bestandteile wie beispielsweise der Terpenalkohole, besonders gut.

Ebenso bevorzugt ist die Waschflüssigkeit ausgewählt aus der Gruppe bestehend aus Branntwein, Wein und Weinextrakt.

Unter "Weinextrakt", auch "Weinkonzentrat" genannt, wird im Rahmen der vorliegenden Erfindung eine Waschflüssigkeit verstanden, die hergestellt wird aus Wein. Dazu wird der Wein abgekühlt, sodass aus diesem im Wesentlichen Wasser in Form von Eis kristallisiert, die übrigen im Wein enthaltenen Bestandteile mit einer Schmelztemperatur unterhalb der von Wasser bleiben in der flüssigen Phase. Das kristallisierte Eis kann dann mittels Filtration oder Zentrifugation von der flüssigen Phase abgetrennt werden. Diese Schritte können mit der erhaltenen flüssigen Phase gegebenenfalls wiederholt werden. Die erhaltene flüssige Phase wird als Weinextrakt bezeichnet und weist beispielsweise einen Schmelzpunkt im Bereich von -30 °C bis -20 °C auf. Wird als Waschflüssigkeit beispielsweise Weinextrakt eingesetzt, so enthält dieser Weinextrakt beispielsweise im Bereich von 30 bis 40 Gew.-% Ethanol, bezogen auf das Gesamtgewicht des Weinextrakts.

Das bei der Herstellung des Weinextraktes abgetrennte Eis kann beispielsweise in die gegorene Mischung rückgeführt werden, wodurch auch die aufgewendete Schmelzwärme zurückgewonnen werden kann.

Als erster Kondensator eignen sich alle dem Fachmann bekannten Kondensatoren, beispielsweise Füllkörperkolonnen, Siebbodenkolonnen, Vigreuxkolonnen oder Festbettkolonnen. Es kann genau ein erster Kondensator eingesetzt werden, ebenso ist es möglich, zwei oder mehrere erste Kondensatoren zu einzusetzen. Zwei oder mehrere erste Kondensatoren können in Reihe geschaltet sein.

Bevorzugt wird Schritt c) im Gegenstrom durchgeführt. Es ist daher bevorzugt, dass die Waschflüssigkeit in entgegengesetzter Richtung zu dem ersten Gasstrom in den ersten Kondensator eingebracht wird.

Bevorzugt kommt die Waschflüssigkeit in direkten Kontakt mit dem ersten Gasstrom. "In direkten Kontakt" bedeutet im Rahmen der vorliegenden Erfindung, dass zwischen dem ersten Gasstrom und der Waschflüssigkeit zumindest Wärmeaustausch, bevorzugt Wärmeaustausch und Stoffaustausch möglich ist.

Das direkte Inkontaktbringen des ersten Gasstroms mit der Waschflüssigkeit erlaubt nicht nur das Abkühlen des ersten Gasstroms und das daraus resultierende zumindest teilweise kondensieren, sondern es können auch zumindest Teile des ersten Gasstroms in der Waschflüssigkeit absorbiert werden. Dadurch können mehr Bestandteile des ersten Gasstroms in die gegorene Mischung rückgeführt werden und so der Geschmack und Geruch besser eingestellt werden.

Beim Inkontaktbringen des ersten Gasstroms mit der Waschflüssigkeit wird der erste Gasstrom abgekühlt, wodurch er zumindest teilweise kondensiert. Im Rahmen der vorliegenden Erfindung umfasst Kondensieren nicht nur den zumindest teilweisen Übergang des ersten Gasstroms aus der Gasphase in eine flüssige Phase, sondern umfasst auch die Absorption von zumindest Teilen des ersten Gasstroms an der Waschflüssigkeit. Bevorzugt ist die Kondensation im erfindungsgemäßen Verfahren eine teilweise Kondensation. Insbesondere bevorzugt kondensieren nur die weiteren Bestandteile des ersten Gasstroms im erfindungsgemäßen Verfahren. Es ist also insbesondere bevorzugt, dass im erfindungsgemäßen Verfahren nur die weiteren Bestandteile kondensieren, während Kohlenstoffdioxid gasförmig bleibt. Es ist daher bevorzugt, dass sich bei der Kondensation in Schritt c) eine kondensierte Phase und ein zweiter Gasstrom bilden.

Der zweite Gasstrom enthält im Wesentlichen Kohlenstoffdioxid. Die kondensierte Phase enthält im Wesentlichen die weiteren Bestandteile. Der zweite Gasstrom kann beispielsweise in einen zweiten Kondensator überführt werden und dort erneut unter Verwendung einer Waschflüssigkeit kondensiert werden. Ebenso ist es möglich, dass der zweite Gasstrom in einen zweiten Kondensator überführt wird und dort mit Waschflüssigkeit kondensiert und/oder mit Aktivkohle in Kontakt gebracht wird und dabei die restlichen weiteren Bestandteile absorbiert werden. Es ist außerdem möglich, den zweiten Gasstrom aus dem ersten Kondensator in die Umgebung als Abluft abzuführen.

Es ist weiterhin möglich, die kondensierte Phase als Waschflüssigkeit in das erfindungsgemäße Verfahren rückzuführen. Dazu wird sie gegebenenfalls zunächst abgekühlt und dann in den ersten Kondensator als Waschflüssigkeit eingeleitet.

Es ist darüber hinaus möglich, den ersten Gasstrom fraktioniert zu kondensieren. Fraktionierte Kondensation als solche ist dem Fachmann bekannt. Im Rahmen der vorliegenden Erfindung wird der erste Gasstrom fraktioniert kondensiert , indem der erste Gasstrom nacheinander mit Waschflüssigkeiten in Kontakt gebracht wird, die unterschiedliche zweite Temperaturen (T2) aufweisen, die im Bereich von -10°C bis -50°C aufweisen. Beispielsweise aber nicht Teil der Erfindung wird der erste Gasstrom zunächst mit einer Waschflüssigkeit in Kontakt gebracht, die eine zweite Temperatur (T2) aufweist, die oberhalb von 0 °C liegt, dann mit einer Waschflüssigkeit, die eine zweite Temperatur (T2) aufweist, die im Bereich von - 15 °C bis 0 °C liegt und schließlich mit einer Waschflüssigkeit, die eine zweite Temperatur (T2) aufweist, die im Bereich von - 30°C bis < - 15 °C liegt. Dadurch werden zunächst die weiteren Bestandteile, die relativ hohe Siedepunkte aufweisen, kondensiert und schließlich die weiteren Bestandteile, die relativ niedrige Siedepunkte aufweisen.

Darüber hinaus ist es möglich, den ersten Gasstrom fraktioniert zu kondensieren, indem die Fraktionen zeitabhängig kondensiert werden. Beispielsweise ist es möglich, die Fraktionen über die Dauer der Gärung zu fraktionieren. Beispielsweise könnte eine erste Fraktion über einen ersten Zeitraum kondensiert werden, eine zweite Fraktion über eine zweiten Zeitraum, der nach dem ersten Zeitraum liegt, und eine dritte Fraktion über einen dritten Zeitraum, der nach dem zweiten Zeitraum liegt. Diese Ausführungsform ist bevorzugt.

Erfindungsgemäß wird der erste Gasstrom in Schritt c) fraktioniert kondensiert.

Beispielsweise liegt der erste Zeitraum (t1) für den die gärfähige Mischung in Schritt b) gegoren wird, bei sieben Tagen. Dann könnte der erste Gasstrom fraktioniert kondensiert werden, indem beispielsweise die am ersten Tag erhaltene kondensierte Phase als erste Fraktion erhalten wird. Die am zweiten und dritten Tag erhaltene kondensierte Phase wird dann als zweite Fraktion erhalten, die am vierten und fünften Tag erhaltene kondensierte Phase wird als dritte Fraktion erhalten und die am sechsten und siebten Tag erhaltene kondensierte Phase wird als vierte Fraktion erhalten.

Während der Gärung der gärfähigen Mischung in Schritt b) werden über den ersten Zeitraum (t1) üblicherweise neben Ethanol noch unterschiedliche weitere Gärprodukte erhalten. So bilden sich zu Beginn des ersten Zeitraums (t1) beispielsweise bevorzugt Terpenalkohole als weitere Gärprodukte. Am Ende des ersten Zeitraums (t1) bilden sich bevorzugt Ester. Durch die vorstehend beschriebene fraktionierte Kondensation können diese unterschiedlichen Gärprodukte im Wesentlichen getrennt voneinander erhalten werden. Dies erlaubt beispielsweise das gezielte Rückführen in die gärfähige Mischung oder in die gegorene Mischung einzelner Fraktionen, um die Zusammensetzung und damit den Geschmack und den Geruch der gegorenen Mischung gezielt zu beeinflussen.

Die gebildeten Gärprodukte können über den in einer bevorzugten Ausführungsform der Erfindung verwendeten Dichtesensor beispielsweise indirekt überwacht werden und so die fraktionierte Kondensation gesteuert werden.

Die bei der fraktionierten Kondensation erhaltenen Fraktionen können zudem weiter fraktioniert werden, beispielsweise durch bekannte Destillations-, Membran- und/oder Rektifikationsverfahren.

Dadurch bilden sich weitere Fraktionen, die ebenfalls gezielt in die gärfähige Mischung und/oder in die gegorene Mischung rückgeführt werden können, um die Zusammensetzung und damit den Geschmack und den Geruch der gegorenen Mischung gezielt zu beeinflussen.

Es ist möglich, dass im Anschluss an Schritt c) ein oder mehrere weitere Schritte durchgeführt werden. Beispielsweise kann ein Schritt d) durchgeführt werden, in dem die Gärung der gärfähigen Mischung in Schritt b) gestoppt wird.

Verfahren zum Stoppen der Gärung der gärfähigen Mischung in Schritt d) sind dem Fachmann als solche bekannt. Beispielsweise kann die Gärung der gärfähigen Mischung in Schritt d) gestoppt werden, indem Schwefeldioxid in die gärfähige Mischung eingeblasen wird und/oder indem die gärfähige Mischung abgekühlt wird. Beispielsweise wird die gärfähige Mischung in Schritt d) auf eine Temperatur, die im Bereich von 0 bis 10 °C liegt, abgekühlt. Ebenso ist es möglich, Ethanol in die gärfähige Mischung zu geben, um die Gärung zu stoppen.

Erfindungsgemäß bevorzugt ist daher auch ein Verfahren zur Herstellung einer gegorenen Mischung, bei dem in Anschluss an Schritt c) der folgende Schritt d) durchgeführt wird:
d) stoppen der Gärung der gärfähigen Mischung in Schritt b) durch Einblasen von Schwefeldioxid in die gärfähige Mischung und/oder abkühlen der gärfähigen Mischung und/oder Zugabe von Ethanol in die gärfähige Mischung.

Das Einblasen des Schwefeldioxids in die gärfähige Mischung kann beispielsweise über die in einer Ausführungsform der Erfindung vom ersten Reaktor umfasste Vorrichtung zum

Einblasen von Gasen und/oder die in einer Ausführungsform der Erfindung vom ersten Reaktor umfasste Pumpe erfolgen.

Auch Schritt d) kann beispielsweise automatisiert erfolgen, wobei der Zeitpunkt, zu dem die Gärung gestoppt werden soll, beispielsweise über einen Dichtesensor erfolgt, insbesondere über den Dichtesensor, der in einer bevorzugten Ausführungsform von dem ersten Reaktor umfasst ist.

Darüber hinaus können im Anschluss an Schritt c) und/oder d) weitere, dem Fachmann bekannte Schritte durchgeführt werden, wie beispielsweise Umfüllung der gegorenen Mischung und/oder eine Reifung der gegorenen Mischung.

Die Erfindung wird nachfolgend anhand von Ausführungsbeispielen und der beigefügten, sich auf die Ausführungsbeispiele beziehenden Zeichnungen, näher erläutert. Es zeigt:

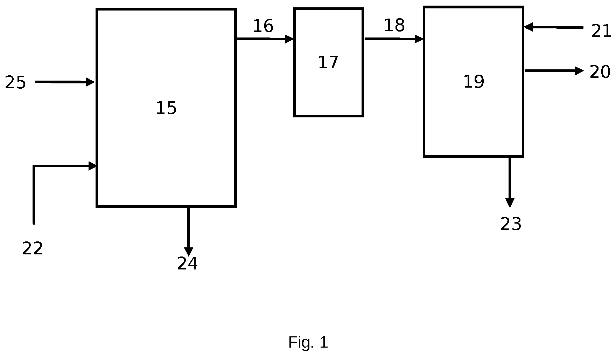

- Fig. 1: eine schematische Darstellung des erfindungsgemäßen Verfahrens.

Fig. 1 zeigt eine schematische Darstellung des erfindungsgemäßen Verfahrens. Die gärfähige Mischung 25 wird in Schritt a) im ersten Reaktor 15 bereitgestellt. Beispielsweise wird die gärfähige Mischung 25 über eine Leitung in dem ersten Reaktor 15 bereitgestellt. Es ist ebenfalls möglich, die gärfähige Mischung 25 direkt in den Reaktor zu geben, ohne sie über eine Leitung zuzuführen.

Anschließend wird die gärfähige Mischung in Schritt b) in dem ersten Reaktor 15 bei einer ersten Temperatur (T1) gegoren. Es werden eine Flüssigphase 24 und ein erster Gasstrom 16 erhalten. Der erste Gasstrom 16 wird anschließend in einen ersten Absorber 17 überführt. In dem ersten Absorber 17 werden saure Bestandteile abgetrennt unter Erhalt des gewaschenen ersten Gasstroms 18. Der gewaschene erste Gasstrom 18 wird dann in den ersten Kondensator 19 überführt. Der gewaschene erste Gasstrom 18 kann bevor er in den ersten Kondensator 19 überführt wird, in einen Adsorber (in Figur 1 nicht gezeigt) eingebracht werden. Der Adsorber enthält beispielsweise Zeolith 3A, um Wasser aus dem gewaschenen ersten Gasstrom 18 zu entfernen.

In dem ersten Kondensator 19 wird der gewaschene erste Gasstrom 18 unter Verwendung einer Waschflüssigkeit 21 kondensiert. Beim Kondensieren des gewaschenen ersten Gasstroms 18 werden die kondensierte Phase 23 und der zweite Gasstrom 20 erhalten. Der zweite Gasstrom 20 kann aus dem ersten Kondensator 19 als Abluft abgeführt werden. Die kondensierte Phase 23 kann beispielsweise in den ersten Reaktor 15 rückgeführt werden (in Fig.1 nicht gezeigt). Dem ersten Reaktor 15 kann zudem Gas 22 zugeführt werden. Beispielsweise kann als Gas 22 Luft und/oder Schwefeldioxid zugeführt werden. Schwefeldioxid kann beispielsweise zugeführt werden, um die Gärung der gärfähigen Mischung zu stoppen.

Bei Bedarf, beispielsweise wenn die Gärung der gärfähigen Mischung beendet ist oder gestoppt worden ist, kann die Flüssigphase 24 aus dem ersten Reaktor abgeführt werden.

### Bezugszeichenliste:

- 15:: erster Reaktor
- 16:: erster Gasstrom
- 17:: erster Absorber
- 18:: gewaschener erster Gasstrom
- 19:: erster Kondensator
- 20:: zweiter Gasstrom
- 21:: Waschflüssigkeit
- 22:: Gas
- 23:: kondensierte Phase
- 24:: Flüssigphase
- 25:: gärfähige Mischung

## Patentansprüche

1. Verfahren zur Herstellung einer gegorenen Mischung, wobei das Verfahren die folgenden Schritte umfasst:
a) Bereitstellen einer gärfähigen Mischung (25) in einem ersten Reaktor (15),
b) Gärung der in Schritt a) bereitgestellten gärfähigen Mischung (25) in dem ersten Reaktor (15) bei einer ersten Temperatur (T1) für einen ersten Zeitraum (t1) unter Erhalt einer Flüssigphase (24) und eines ersten Gasstroms (16), wobei die Flüssigphase (24) eine gegorene Mischung enthält und der erste Gasstrom (16) Kohlenstoffdioxid enthält,
c) Überführen des in Schritt b) erhaltenen ersten Gasstroms (16) aus dem ersten Reaktor (15) in einen ersten Kondensator (19), wobei der erste Gasstrom (16) von der in Schritt b) erhaltenen Flüssigphase (24) abgetrennt wird unter Erhalt der gegorenen Mischung in dem ersten Reaktor (15) und des ersten Gasstroms (16) in dem ersten Kondensator (19),
**dadurch gekennzeichnet, dass**
der erste Gasstrom (16) in dem ersten Kondensator (19) in Schritt c) zumindest teilweise kondensiert wird unter Verwendung einer Waschflüssigkeit (21), die eine zweite Temperatur (T2) aufweist, wobei
die zweite Temperatur (T2) im Bereich von -50 °C bis -10 °C liegt, wobei die Waschflüssigkeit (21) in direkten Kontakt mit dem ersten Gasstrom (16) kommt und wobei zwischen dem ersten Gasstrom (16) und der Waschflüssigkeit (21) Wärmeaustausch und Stoffaustausch möglich ist, wobei
der erste Gasstrom (16) in Schritt c) fraktioniert kondensiert wird.

2. Verfahren gemäß Anspruch 1, **dadurch gekennzeichnet, dass** die erste Temperatur (T1) in Schritt b) im Bereich von 5 bis 50 °C liegt.

3. Verfahren gemäß einem der Ansprüche 1 oder 2, **dadurch gekennzeichnet, dass** die in Schritt a) bereitgestellte gärfähige Mischung (25) Wasser, Hefe, Fruchtsäuren, Polyphenole, Mono- und Disaccharide enthält.

4. Verfahren gemäß einem der Ansprüche 1 bis 3, **dadurch gekennzeichnet, dass** der in Schritt b) erhaltene erste Gasstrom (16) zusätzlich mindestens einen weiteren Bestandteil ausgewählt aus der Gruppe bestehend aus Hefe, Alkoholen, Terpenoiden, Estern, Aldehyden, Ketonen, Pyrazinen und Thiolen enthält.

5. Verfahren gemäß einem der Ansprüche 1 bis 4, **dadurch gekennzeichnet, dass** der erste Reaktor (15) einen Wärmetauscher umfasst.

6. Verfahren gemäß einem der Ansprüche 1 bis 5, **dadurch gekennzeichnet, dass** die verwendete Waschflüssigkeit (21) Ethanol enthält.

7. Verfahren gemäß einem der Ansprüche 1 bis 6, **dadurch gekennzeichnet, dass** die zweite Temperatur (T2) im Bereich von -30 °C bis -20° C liegt.

8. Verfahren gemäß einem der Ansprüche 1 bis 7, **dadurch gekennzeichnet, dass** der erste Zeitraum (t1) in Schritt b) im Bereich von einer Stunde bis sechs Monaten liegt.

## Claims

1. Process for the preparation of a fermented mixture, the process comprising the following steps :
a) Providing a fermentable mixture (25) in a first reactor (15),
b) fermenting the fermentable mixture (25) provided in step a) in the first reactor (15) at a first temperature (T1) for a first period of time (t1) to obtain a liquid phase (24) and a first gas stream (16), wherein the liquid phase (24) comprises a fermented mixture and the first gas stream (16) comprises carbon dioxide,
c) transferring the first gas stream(16) obtained in step b) from the first reactor (15) to a first condenser (19), wherein the first gas stream (16) is separated from the liquid phase (24) obtained in step b) to obtain the fermented mixture in the first reactor (15) and the first gas stream (16) in the first condenser (19),
**characterised in that**
the first gas stream (16) is at least partially condensed in the first condenser (19) in step c) using a scrubbing liquid (21) having a second temperature (T2),
wherein the second temperature (T2) is in the range of -50°C to -10°C,
wherein the scrubbing liquid (21) comes into direct contact with the first gas stream (16) and wherein heat exchange and mass transfer is possible between the first gas stream (16) and the scrubbing liquid (21), wherein the first gas stream (16) is fractionally condensed in step c).

2. Process according to claim 1, **characterised in that** the first temperature (T1) in step b) is in the range of 5 to 50 °C.

3. Process according to any one of claims 1 or 2, **characterised in that** the fermentable mixture (25) prepared in step a) contains water, yeast, fruit acids, polyphenols, mono- and disaccharides.

4. Process according to any one of claims 1 to 3, **characterised in that** the first gas stream (16) obtained in step b) additionally contains at least one further constituent selected from the group consisting of yeast, alcohols, terpenoids, esters, aldehydes, ketones, pyrazines and thiols.

5. Process according to any one of claims 1 to 4, **characterised in that** the first reactor (15) comprises a heat exchanger.

6. Process according to any one of claims 1 to 5, **characterised in that** the scrubbing liquid used (21) contains ethanol.

7. Process according to any one of claims 1 to 6, **characterised in that** the second temperature (T2) is in the range of -30°C to -20°C.

8. Process according to any one of claims 1 to 7, **characterised in that** the first time period (t1) in step b) is in the range of one hour to six months.

## Revendications

1. Procédé de préparation d'un mélange fermenté, ledit procédé comprenant les étapes suivantes:
a) Mise en disposition d'un mélange fermentescible (25) dans un premier réacteur (15),
b) fermentation du mélange fermentescible (25) fourni à l'étape a) dans le premier réacteur (15) à une première température (T1) pendant une première période (t1), en obtenant une phase liquide (24) et un premier courant gazeux (16), la phase liquide (24) contenant un mélange fermenté et le premier courant gazeux (16) contenant du dioxyde de carbone,
c) transfert du premier courant gazeux (16) obtenu à l'étape b) du premier réacteur (15) à un premier condenseur (19), le premier courant gazeux (16) étant séparé de la phase liquide (24) obtenue à l'étape b), en obtenant le mélange fermenté dans le premier réacteur (15) et le premier courant gazeux (16) dans le premier condenseur (19),
**caractérisé en ce que**
le premier flux de gaz (16) est au moins partiellement condensé dans le premier condenseur (19) à l'étape c) en utilisant un liquide de lavage (21) qui présente une deuxième température (T2), dans lequel
la deuxième température (T2) se situe dans la plage de -50 °C à -10 °C, où
le liquide de lavage (21) vient en contact direct avec le premier flux de gaz (16) et où un échange de chaleur et un transfert de matière sont possibles entre le premier flux de gaz (16) et le liquide de lavage (21), où
le premier courant gazeux (16) est condensé de manière fractionnée à l'étape c).

2. Procédé selon la revendication 1, **caractérisé en ce que** la première température (T1) à l'étape b) se situe dans la plage de 5 à 50°C.

3. Procédé selon l'une des revendications 1 ou 2, **caractérisé en ce que** le mélange fermentescible (25) fourni à l'étape a) contient de l'eau, de la levure, des acides de fruits, des polyphénols, des mono- et disaccharides.

4. Procédé selon l'une des revendications 1 à 3, **caractérisé en ce que** le premier courant gazeux (16) obtenu à l'étape b) contient en outre au moins un autre constituant choisi dans le groupe constitué par les levures, les alcools, les terpénoïdes, les esters, les aldéhydes, les cétones, les pyrazines et les thiols.

5. Procédé selon l'une quelconque des revendications 1 à 4, **caractérisé en ce que** le premier réacteur (15) comprend un échangeur de chaleur.

6. Procédé selon l'une quelconque des revendications 1 à 5, **caractérisé en ce que** le liquide de lavage utilisé (21) contient de l'éthanol.

7. Procédé selon l'une quelconque des revendications 1 à 6, **caractérisé en ce que** la deuxième température (T2) est comprise entre -30°C et -20°C.

8. Procédé selon l'une quelconque des revendications 1 à 7, **caractérisé en ce que** la première période (t1) à l'étape b) est comprise entre une heure et six mois.
